# EUROPEAN PATENT SPECIFICATION

(11) **EP 0 762 063 B1**
(45) Date of publication and mention of the grant of the patent: **17.01.2001**
(21) Application number: 96111189.5
(22) Date of filing: 11.07.1996
(51) Int. Cl.: F25B 41/06

(54) **Thermostatic expansion valve**
Thermostatisches Expansionsventil
Détendeur thermostatique

(30) Priority: 01.09.1995 JP 22522995
(43) Date of publication of application: 12.03.1997
(73) Proprietor: Fujikoki Corporation, Tokyo (JP)
(72) Inventor: Ikoma, Tetsuro, c/o Fujikoki Corporation, Tokyo (JP); Yano, Masamichi, c/o Fujikoki Corporation, Tokyo (JP)
(74) Representative: Modiano, Guido, Dr.-Ing.

(56) References cited:
- EP-A- 0 659 600
- US-A- 3 810 366
- US-A- 5 361 597

## Description

### BACKGROUND OF THE INVENTION

### Field of the Invention

This invention relates to a thermostatic expansion valve as defined in the preamble of claim 1. Such a valve is known, for example, from EP-A-0 659 600 and can be used in an air conditioner of a car.

### Related Art

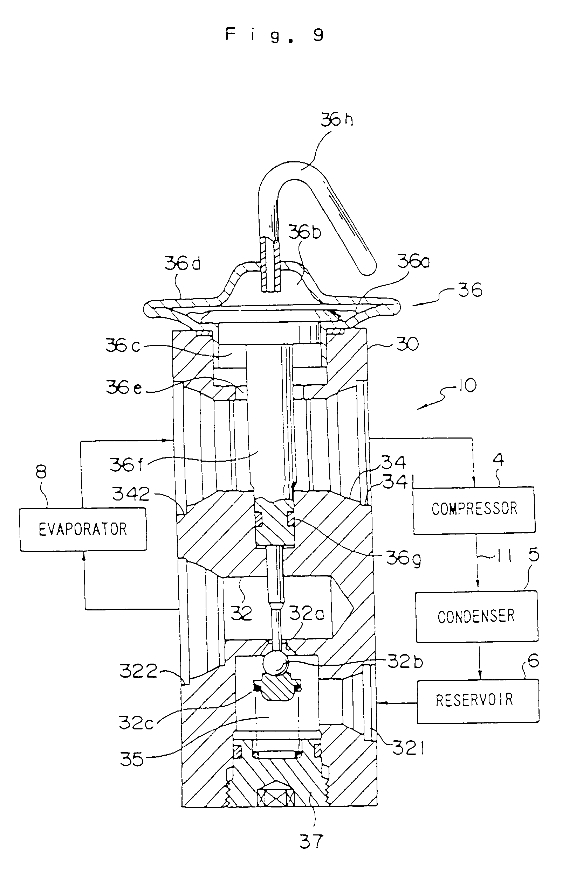

Fig. 9 is a cross-sectional view of a general aspect of a conventional expansion valve 10. A valve body 30 of the thermostatic expansion valve includes a first pathway 32 and a second pathway 34 located at upper and lower separated sites in its refrigerant circuit 11 for the refrigerating cycle. That is, the first pathway 32 is interposed in a portion after exiting a refrigerant outlet of a condenser 5 and passing through a reservoir 6 before entering a refrigerant inlet of an evaporator 8, and the second pathway 34 is located in a portion downstream a refrigerant outlet of the evaporator toward a refrigerant inlet of a compressor 4.

Provided in the first pathway 32 is an orifice 32a for thermally expanding a liquid refrigerant supplied from the refrigerant outlet of the reservoir 6. The orifice 32a has a center line along the lengthwise direction of the valve body 30. The orifice 32a has formed a valve seat at its inlet to closely receive a valve member 32b pressed thereto by a compressed coil spring or any other appropriate biasing means, 32c.

The first pathway 32 introducing the liquid refrigerant from the reservoir 6 is a passage of the liquid refrigerant, and includes an inlet port 321 and a valve chamber 35 connected to the inlet port 321. The valve chamber 35 is a cylindrical box-like chamber which is coaxial with the center line of the orifice 32a, and it is hermetically sealed by a plug 37.

Mounted on the upper end of the valve body 30 is a valve driving mechanism 36 for driving the valve member 32b. The valve driving mechanism 36 has a pressure-operative housing 36d defining an interior space which is partitioned into upper and lower pressure-operative chambers 36b, 36c by a diaphragm 36a.

The lower pressure-operative chamber 36c of the pressure-operative housing 36d is communicated with the second pathway 34 via an equalizer bore 36e which is concentric with the center line of the orifice 32a.

Vapor refrigerant from the refrigerant outlet of the evaporator 8 flows in the second pathway 34, which is therefore a passage of vapor-phase refrigerant, and the pressure of the vapor refrigerant is applied to the lower pressure-operative chamber 36c via the equalizer bore 36e.

Provided in the equalizer bore 36e is a valve driving rod 36f concentrically extending from the lower surface of the diaphragm 36a into the orifice 32a of the first pathway 32. The valve driving rod 36f is supported for slidable vertical movement by an inner surface of the lower pressure-operative chamber 36c of the pressure-operative housing 36d, which constitutes the valve driving mechanism 36, and a partition wall between the first pathway 32 and the second pathway 34 of the valve body 30, such that its lower end abuts the valve member 32b. A seal member 36g is mounted on an outer circumferential surface of the valve driving rod 36f within the rod slidable guide hole defined by the partition wall to prevent leakage of the refrigerant from the first pathway 34 to the second pathway 34, or vice versa.

The upper pressure-operative chamber 36b of the pressure-operative housing 36d contains a known heat-sensitive gas for driving the diaphragm. The diaphragm driving fluid receives the heat of the vapor refrigerant from the second pathway 34, valve driving rod 36f exposed to the equalizer bore 36e communicating with the second pathway 34 and a diaphragm 36a while the vapor refrigerant flows in the second pathway 34 from the refrigerant outlet of the evaporator 8. Numeral 36h denotes a tube used to introduce the heat-sensitive gas therethrough and sealed thereafter.

The heat-sensitive gas in the upper pressure-operative chamber 36b applies to the upper surface of the diaphragm 36a a pressure corresponding to the heat transferred from the refrigerant vapor, and the diaphragm 36a moves vertically due to a difference between the pressure of the diaphragm driving gas applied to its upper surface and the pressure applied to its lower surface.

The vertical displacement of the diaphragm 36a causes a movement of the valve driving rod 36f to move the valve member 32b to or away from the valve seat of the orifice 32a. As a result, the flow rate of the refrigerant is controlled.

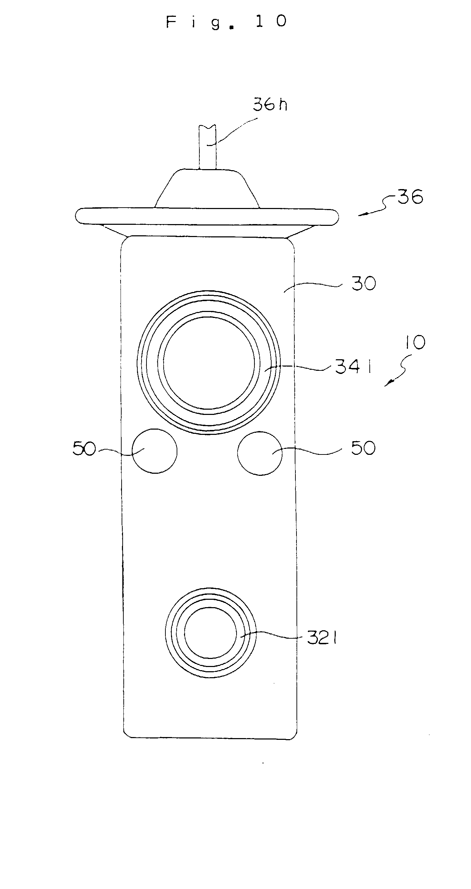

Fig. 10 is a side-elevational view of the conventional expansion valve 10 shown in Fig. 9. The valve body 30 has two bolt holes 50.

In the conventional expansion valve, the valve driving rod 36f is located substantially at the center of the valve body 30, which results in locating the valve driving mechanism 36 in a central portion of the valve body 30.

Additionally, the valve body 30 and the valve driving rod 36f of the conventional expansion valve are made of an aluminum alloy, and the housing 36d and the diaphragm 36a both constituting the valve driving mechanism 36 are made of a stainless steel.

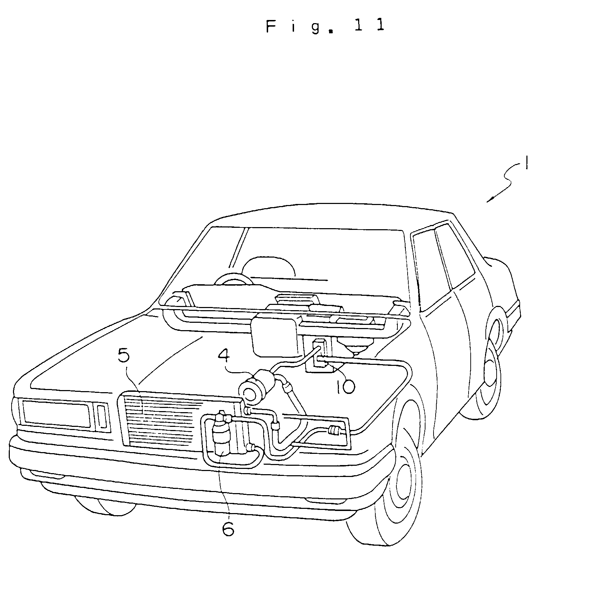

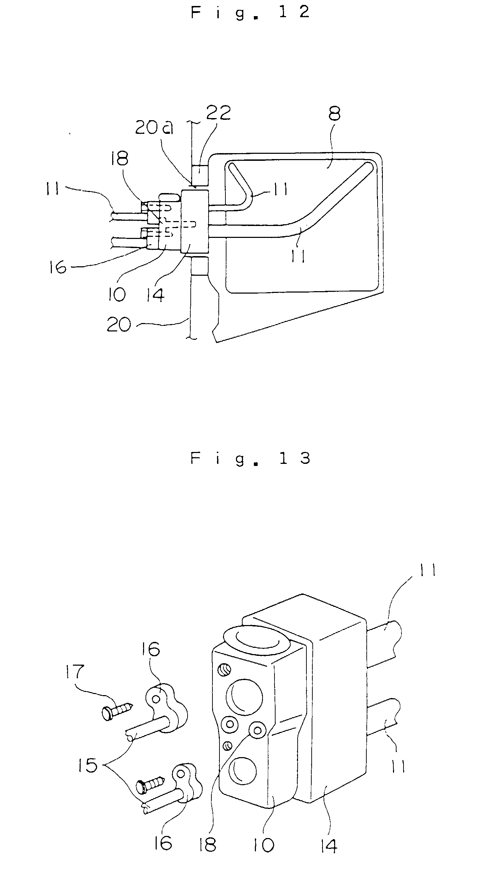

Fig. 11 is a perspective view of a general aspect of a conventional air conditioner of a car 1, Fig. 12 is a schematic view showing the relationship between the thermostatic expansion valve and the evaporator of the air conditioner, and Fig. 13 is a perspective view of means for connecting circulation pipes to the thermostatic expansion valve shown in Fig. 12. Mounted in the engine compartment of a car, generally labelled 1, are a compressor 4, a condenser 5 and a reservoir 6.

The engine compartment is separated from the cabin by a partition wall 20, and the evaporator 8 is located in the cabin. Pressurized refrigerant sent from the reservoir 6 expands in the thermostatic expansion valve 10, and is sent to the evaporator 8.

A refrigerant pathway 11 extending from the engine compartment is fixed to the thermostatic expansion valve 10 by a connector 16 and screws 17 applied thereto, and the thermostatic expansion valve 10 is fixed to a bracket 14 by bolts 18. The bracket 14 is fixed in an opening 20a in the partition wall 20 via a packing 22, etc.

In the above-mentioned conventional expansion valve, however, it is necessary to use packing or a bracket upon fixing the expansion valve to the partition wall, or other like means, and the mounting operation takes time and labor, which causes an increase in cost.

### SUMMARY OF THE INVENTION

It is therefore an object of the invention to provide a thermostatic expansion valve that can be readily fixed to a partition wall, or other like means, by using a mounting space formed on a valve body of an thermostatic expansion valve, without using a bracket or other parts particularly prepared for fixture.

According to the invention, there is provided a thermostatic expansion valve having a mounting space on the valve body thereof as defined in claim 1.

### BRIEF DESCRIPTION OF THE DRAWINGS

Fig. 1 is a perspective view of a general aspect of a thermostatic expansion valve according to an embodiment of the invention;
Fig. 2 is a perspective view of the thermostatic expansion valve according to the invention from which an attaching element is removed;
Figs. 3A and 3B are perspective views of attaching elements;
Fig. 4 is a perspective view of a general aspect of a thermostatic expansion valve taken as a further embodiment of the invention;
Fig. 5 is a perspective view of the thermostatic expansion valve according to the further embodiment of the invention, from which an attaching element is removed;
Figs. 6A and 6B are perspective views of attaching elements,
Fig. 7 is a perspective view of a general aspect of a thermostatic expansion valve taken as a still further embodiment of the invention;
Fig. 8 is a perspective view of a general aspect of a thermostatic expansion valve taken as a yet further embodiment of the invention;
Fig. 9 is a cross-sectional view showing an inner structure of a thermostatic expansion valve;
Fig. 10 is a side-elevational view of the thermostatic expansion valve shown in Fig. 9;
Fig. 11 is an explanatory view showing a general aspect of an automobile air conditioner;
Fig. 12 is an explanatory view showing a mounted aspect of a thermostatic expansion valve in an automobile air conditioner;
Fig. 13 is an explanatory view showing means for coupling a thermostatic expansion valve; and
Fig. 14 is a plan view showing a mounted status of a thermostatic expansion valve.

### DESCRIPTION OF THE PREFERRED EMBODIMENTS

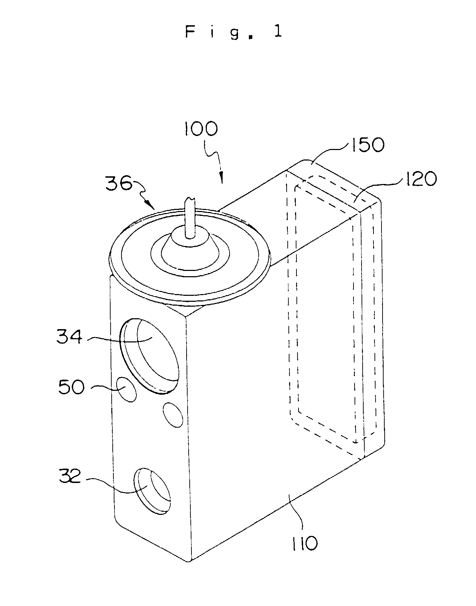

Fig. 1 is a perspective view of an embodiment of the invention.

A thermostatic expansion valve, generally labelled 100, has the interior structure shown in the cross-sectional view of Fig. 9, namely, having a box-shaped expansion valve body 110, in addition to the other elements equivalent to and labelled with the same reference numerals with those in Figs. 9 and 10. The expansion valve body 110 has the valve driving mechanism 36 at one end portion on its top end. Attached to a side surface of the expansion valve body 110 remoter from the valve driving mechanism 36 is an attaching element 150 behaving as sealing means of a partition wall 20. Thus, the valve driving member 36 is one-sided, or non-centralized, on the top of the expansion valve body 110.

The attaching element 150 is affixed onto an offset portion 120 formed on the valve body 110.

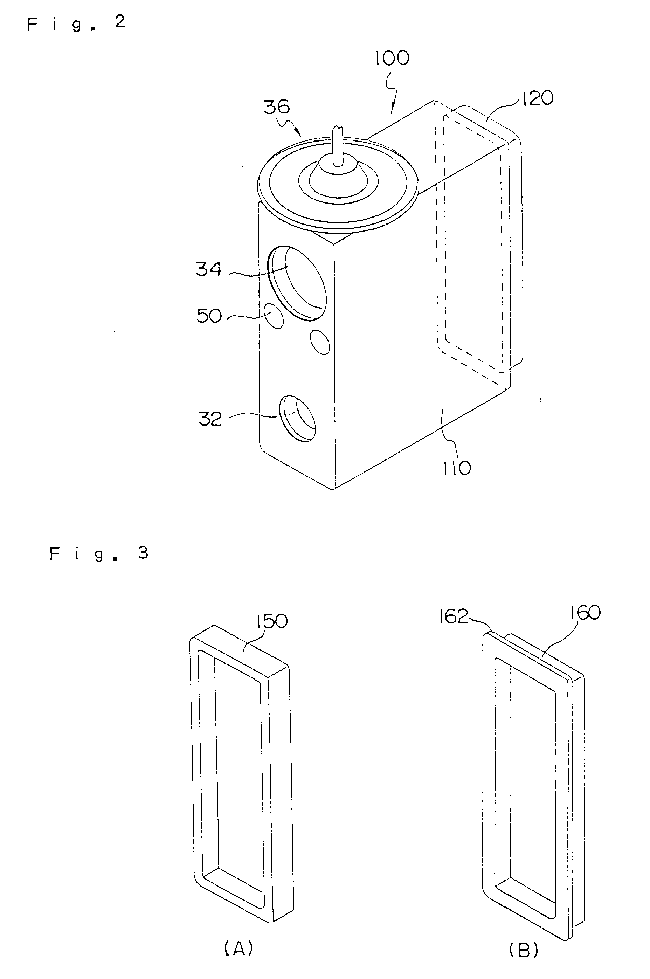

Fig. 2 shows the configuration of the offset portion 120 of the valve body 110, which is narrowed by trimming the marginal edge of the side end surface of the box-shaped valve body by constant width and depth.

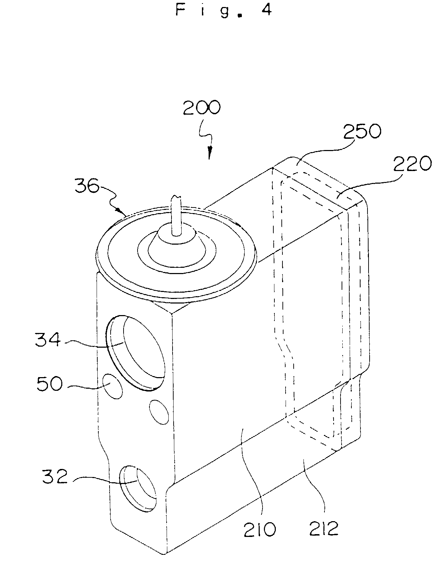

Fig. 3A shows the attaching element 150 in form of a rectangular frame. The attaching element 150 is made of synthetic rubber or any other appropriate elastic material to resiliently fits onto the offset portion 120 of the valve body 110 and to fit in and seal the partition wall 20.

Fig. 3B shows a modified attaching element 160 in form of a frame having a flange portion. The flange portion 162 can be used to positionally fix the thermostatic expansion valve 100 in an opening of the partition wall 20, and the attaching element 160 here again behaves as sealing means.

Fig. 4 is a perspective view showing a further embodiment of the invention.

A valve body 210 of a thermostatic expansion valve 200 has a slimmed portion 212 at the lower end opposite from the upper end where the valve driving mechanism 36 is mounted. By reducing the width of the lower portion of the valve body 210, the weight of the valve body can be reduced.

Here again, an attaching element 250 to fit to and seal the partition wall 20 is attached to one of side surfaces of the valve body 210 opposite from the valve driving mechanism 36. The remainder structure of the embodiment of Fig. 4 is the same as that of the preceding embodiment.

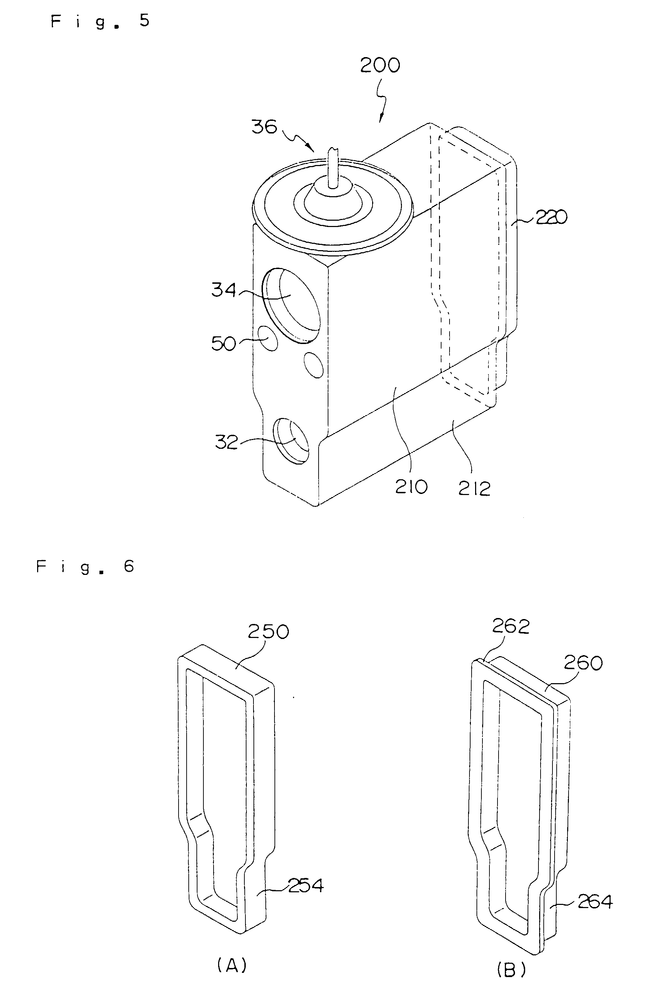

Fig. 5 shows the configuration of an offset portion 220 formed on the valve body 210, which includes a slimmed lower end following the side configuration of the valve body 210.

Figs. 6A and 6B show configurations of the attaching element 250 and a modified attaching element 260.

The attaching element 250 of Fig. 6A is a frame-shaped member having a slimmed portion 254 corresponding to the side-elevational shape of the valve body 210, and is sized to closely fit onto the offset portion 220 of the valve body 210.

Fig. 6B is a perspective view of a modified attaching element 260 having a slimmed portion 264 corresponding to the side-elevational shape of the valve body 210 and having a flange 262. The thermostatic expansion valve 200 carrying the attaching element 260 thereon is readily fixed in position in the opening of the partition wall 20, and the attaching element 260 seals the opening.

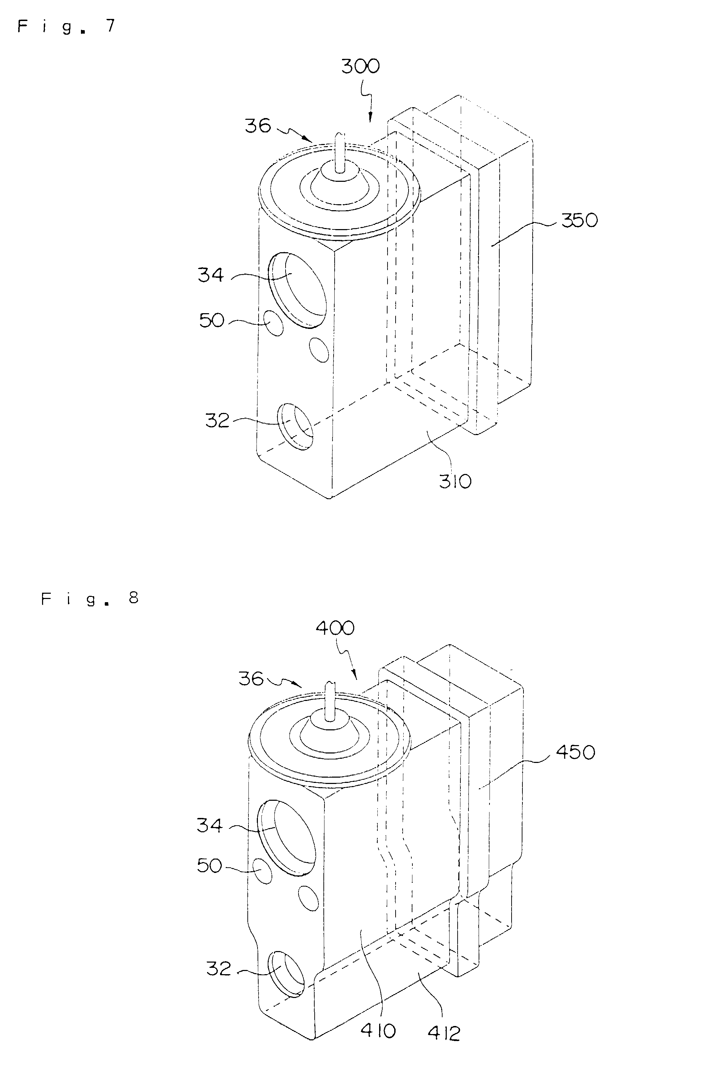

Fig. 7 is a perspective view of a still further embodiment of the invention.

A thermostatic expansion valve 300 has a box-shaped valve body 310 which supports on its top end the valve driving mechanism 36. The valve body 310 defines refrigerant pathways 32 and 34, and has formed through holes 50 for receiving bolts. The valve body 310 is elongated at one end opposite from the valve driving mechanism 36, and an attaching element 350 is attached onto the elongated portion.

The attaching element 350 has one of configurations shown in Figs. 3A and 3B and is made of rubber to closely, resiliently fix onto the valve body 310. The attaching element having the flange makes it easy to determine the position of the valve body relative to the partition wall or other like means.

Fig. 8 is a perspective of a yet further embodiment of the invention.

A valve body 410 of a thermostatic expansion valve 400 has a slimmed portion 412. The valve body 410 has an elongated end opposite from one end where the valve driving mechanism 36 is mounted. Attached onto the elongated portion is an attaching element 450.

The attaching element 450 has one of configurations shown in Figs. 6A and 6B to closely fit onto the valve body 410. When the attaching element 450 has the flange portion, determination of the position of the valve body 410 relative to the partition wall, etc. becomes easy.

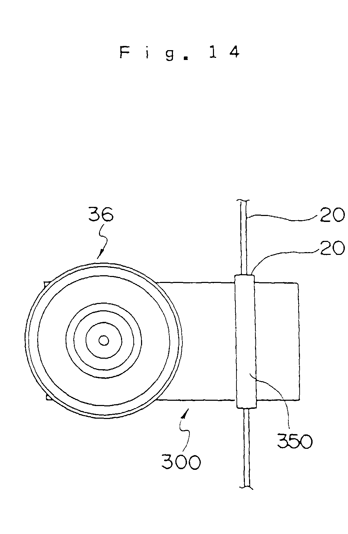

One or another thermostatic expansion valve described above is fixed in the partition wall 20 shown in Fig. 1 by means of an appropriate version of the attaching element. That is, as shown in Fig. 14, which is a plan view showing a relation of the expansion valve relative to the partition wall 20, an opening 20a of a shape corresponding to that of the attaching element 350 of Fig. 7, for example, is made in the partition wall 20, and the expansion valve 300 is inserted and fixed in the opening 20a via the attaching element 350. As a result, the attaching element 350 behaves as sealing means between the valve body 300 and the partition wall 20, and the valve body 300 is reliably fixed to the partition wall. Thus, a quickly mounted automobile air conditioner is realized.

As described above, the thermostatic expansion valve locates its valve driving mechanism nearest to one side end on the top end of the box-shaped valve body and uses the other side end of the valve body for making a mounting space.

Having this arrangement, the thermostatic expansion valve can be fixed easily and directly to a partition wall between the engine compartment and the cabin of a car, and hence facilitates the mounting operation. In addition, by configuring the mounting space as an offset shape, the valve body can be fixed in position precisely and easily via the attaching element, such as a sealing member. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A thermostatic expansion valve (100; 200; 300; 400) comprising:
a box-shaped valve body (110; 210; 310; 410) defining a pathway (32) for introducing pressurized refrigerant and a pathway (34) for delivering depressurized refrigerant;
a valve member (32b) disposed between said pathways (32, 34) in said valve body (110; 210; 310; 410) for controlling the flow of said refrigerant;
a housing (36d) disposed at an upper end of said valve body (110; 210; 310; 410) and defining a pressure-variable space having a diaphragm (36a) to drive said valve member (32b); and
biasing means (32c) disposed in a lower end portion of said valve body (110; 210; 310; 410) to bias said valve member (32b)
characterized in that:
said valve body (110; 210; 310; 410) has a mounting space (120; 220) offset along an outer circumferential surface of said valve body (110; 210; 310; 410).

2. The thermostatic expansion valve (100; 200; 300; 400) according to claim 1, wherein said housing (36d) is disposed nearest to one of side ends on said upper end of said valve body (110; 210; 310; 410).

3. The thermostatic expansion valve (100; 200; 300; 400) according to claims 1 or 2, wherein said mounting space (120; 220) is an offset portion formed at a side end portion of said valve body (110; 210; 310; 410).

4. The thermostatic expansion valve (100; 200; 300; 400) according to one or more of claims 1-3, wherein said mounting space (120; 220) has attached a seal member (150; 160; 250; 260).

5. The thermostatic expansion valve (100; 200; 300; 400) according to one or more of claims 1-4, wherein said valve body (210; 410) has a slimmed portion (212; 412) at said lower end thereof.

6. The thermostatic expansion valve (100; 200; 300; 400) according to one or more of claims 1-4, wherein said mounting space (120) is formed by trimming a marginal edge of the side end surface of said valve body (110) by a constant width and depth.

7. The thermostatic expansion valve (100; 200; 300; 400) according to claim 4, wherein said seal member (160) is in form of a frame having a flange portion (162).

## Patentansprüche

1. Ein thermostatisches Expansionsventil (100; 200; 300; 400), das folgendes umfaßt:
einen kastenförmigen Ventilkörper (110; 210; 310; 410), der einen Pfad (32) zum Einführen eines druckbeaufschlagten Kühlmittels und einen Pfad (34) zur Abgabe des druckverminderten Kühlmittels bestimmt;
einen Ventilkörper (32b), der zwischen den Pfaden (32, 34) im Ventilkörper (110; 210; 310; 410) angeordnet ist, um den Fluß des Kühlmittels zu regeln;
ein Gehäuse (36d), das an einem oberen Ende des Ventilkörpers (110; 210; 310; 410) angeordnet ist und das einen druckveränderlichen Raum bestimmt, der über eine Membran (36a) verfügt, um das Ventilglied (32b) zu betreiben; und
ein Vorbelastungsmittel (32c), das in einem unteren Endabschnitt des Ventilkörpers (110; 210; 310; 410) angeordnet ist, um das Ventilglied (32b) vorzubelasten, dadurch gekennzeichnet, daß
der Ventilkörper (110; 210; 310; 410) einen Anbringungsraum (120; 220) aufweist, der entlang einer äußeren Umfangsfläche des Ventilkörpers (110; 210; 310; 410) versetzt ist.

2. Das thermostatische Expansionsventil (100; 200; 300; 400) nach Anspruch 1, worin das Gehäuse (36d) am nächsten zu einem der Seitenenden am oberen Ende des Ventilkörpers (110; 210; 310; 410) angebracht ist.

3. Das thermostatische Expansionsventil (100; 200; 300; 400) nach den Ansprüchen 1 oder 2, worin der Anbringungsraum (120; 220) ein versetzter Abschnitt ist, der an einem Seitenendabschnitt des Ventilkörpers (110; 210; 310; 410) ausgebildet ist.

4. Das thermostatische Expansionsventil (100; 200; 300; 400) nach einem oder mehreren der Ansprüche 1-3, worin der Anbringungsraum (120; 220) ein Dichtungsglied (150; 160; 250; 260) angebracht hat.

5. Das thermostatische Expansionsventil (100; 200; 300; 400) nach einem oder mehreren der Ansprüche 1-4, worin der Ventilkörper (210; 410) an seinem unteren Ende einen verdünnten Abschnitt (212; 412) aufweist.

6. Das thermostatische Expansionsventil (100; 200; 300; 400) nach einem oder mehreren der Ansprüche 1-4, worin der Anbringungsraum (120) ausgebildet wird, indem ein Endstück des Randes der Seitenendoberflächen des Ventilkörpers (110) um eine konstante Breite und Tiefe getrimmt wird.

7. Das thermostatische Expansionsventil (100; 200; 300; 400) nach Anspruch 4, worin das Dichtungsglied (160) die Form eines Rahmens hat, der einen Flanschabschnitt (162) aufweist.

## Revendications

1. Détendeur thermostatique (100; 200; 300; 400) comprenant :
un corps de valve en forme de boîte (110; 210; 310; 410) définissant un passage 32 pour introduire un réfrigérant sous pression, et un passage 34 pour délivrer le réfrigérant détendu ;
un élément de valve (32b) disposé entre lesdits passages (32, 34) dans le corps de valve (110; 210; 310; 410) pour contrôler l'écoulement dudit réfrigérant ;
un boîtier 36d disposé sur une extrémité supérieure dudit corps de valve (110; 210; 310; 410) et définissant un espace variable en fonction de la pression comportant un diaphragme 36a pour entraîner ledit élément de valve 32b ; et des moyens de sollicitation (32c) disposés dans une partie inférieure dudit corps de valve (110; 210; 310; 410) pour solliciter ledit élément de valve (32b),
caractérisé en ce que :
ledit corps de valve (110; 210; 310; 410) comporte une zone de montage (120; 220) décentrée selon une surface circonférentielle extérieure dudit corps de valve (110; 210; 310; 410).

2. Détendeur thermostatique (100; 200; 300; 400) selon la revendication 1, dans laquelle ledit boîtier (36d) est disposé au plus près de l'une des extrémités latérales sur ladite extrémité supérieure dudit corps de valve (110; 210; 310; 410).

3. Détendeur thermostatique (100; 200; 300; 400) selon l'une des revendications 1 et 2, dans laquelle ladite zone de montage (120; 220) est une partie décentrée formée sur une partie d'extrémité latérale dudit corps de valve (110; 210; 310; 410).

4. Détendeur thermostatique (100; 200; 300; 400) selon l'une ou plusieurs des revendications 1 à 3, dans laquelle un élément d'étanchéité (150; 160; 250; 260) est fixé sur ladite zone de montage (120; 220).

5. Détendeur thermostatique (100; 200; 300; 400) selon l'une 5 ou plusieurs des revendications 1 à 4, dans laquelle ledit corps de valve (210; 410) comporte une partie amincie (212; 412) à ladite extrémité inférieure de celle-ci.

6. Détendeur thermostatique (100; 200; 300; 400) selon l'une 10 ou plusieurs des revendications 1 à 4, dans laquelle ladite zone de montage (120) est formée en rognant un bord marginal de la surface d'extrémité latérale dudit corps de valve (110) sur une largeur et sur une profondeur constantes.

7. Détendeur thermostatique (100; 200; 300; 400) selon la revendication 4, dans laquelle ledit élément d'étanchéité (160) présente la forme d'un cadre comportant un rebord (162).
